# NEUE EUROPÄISCHE PATENTSCHRIFT

(11) **EP 0 222 855 B2**
(45) Veröffentlichungstag und Bekanntmachung des Hinweises auf die Entscheidung über den Einspruch: **31.08.1994**
(45) Hinweis auf die Patenterteilung: 04.04.1990
(21) Anmeldenummer: 86903320.9
(22) Anmeldetag: 10.05.1986
(51) Int. Cl.: F16L 33/00, B21K 1/16

(54) **VERFAHREN ZUR HERSTELLUNG EINES SCHLAUCHNIPPELS FÜR HYDRAULISCH BELASTETE PRESS- ODER SCHRAUBARMATUREN**
METHOD FOR FABRICATING A HOSE ADAPTER FOR THREADED OR NESTED NIPPLES SUBJECTED TO HYDRAULIC LOADS
PROCEDE DE FABRICATION D'UN EMBOUT POUR RACCORDS FILETES OU A EMBOITEMENT SOUMIS A DES CHARGES HYDRAULIQUES

(30) Priorität: 11.05.1985 DE 3517163
(43) Veröffentlichungstag der Anmeldung: 27.05.1987
(73) Patentinhaber: Aeroquip, Zweigniederlassung der Trinova GmbH, D-76532 Baden-Baden (DE)
(72) Erfinder: MATUSZCZAK, Bernd, D-7591 Sasbach (DE); WETZEL, Jürgen, D-7570 Baden-Baden 19 (DE)
(74) Vertreter: Rehberg, Elmar, Dipl.-Ing.
(86) Internationale Anmeldenummer: EP8600277
(87) Internationale Veröffentlichungsnummer: WO8606813

(56) Entgegenhaltungen:
- CH-A- 214 680
- DE-C- 3 322 797
- FR-A- 1 043 120
- FR-A- 2 338 447
- FR-A- 2 379 013
- US-A- 2 170 811
- Zeitschrift "Industrieanzeiger", Nr. 12 (1984), 106. Jg., S. 12-14
- Zeitschrift "Draht-Welt", Heft 9 (Sept. 1964), 50. Jg., S. 561-567
- Prospekt der Firma Maschinenfabrik Heinrich Müller, Pforzheim, "Rundknetautomaten in Linear- und Transfer-Bauweise", 1500 5.83
- " Untersuchungen über die Bewegungen und Kräfte beim Rundkneten ", Dissertation A. Uhlig, TU Hannover , 1964
- Erstes Umformtechnisches Kolloquium Darmstadt (1980), Bericht Nr. 1 des Institutes für Umformtechnik, TH Darmstadt, "Möglichkeiten der Umformung durch Rundkneten auf Ringläufern", E. Gölitzer

## Beschreibung

Die Erfindung bezieht sich auf ein Verfahren zur Herstellung von Schlauchnippeln der leichten oder der schweren Baureihe für Hydraulisch belastete Preß- oder Schraubarmaturen, mit einem Nippelende zum Aufschieben eines Schlauches, einem Verankerungsteil zur Aufnahme der Fassung und einem Anschlußrohr, wobei das Nippelende eine für die Schlauchfesthaltung bestimmte Oberflächengestaltung mit Nuten bzw. Rillen und der Verankerungsteil eine Verankerungsnut zum Angriff der Fassung aufweist.

Unter einem Schlauchnippel wird das eine Teil einer Preß- oder Schraubarmatur verstanden, welches ein Nippelende, ein Verankerungsteil und ein Anschlußrohr aufweist, siehe zB DE-C-3322797.

Die Erfindung bezieht sich auf solche Schlauchnippel, die durch ein Medium druckmäßig belastet sind. Die Fassung kann mit dem Schlauchnippel durch Pressen oder durch eine Schraubbewegung mit Hilfe eines Gewindes verbunden werden.

Bei einem bekannten Verfahren zur Herstellung eines Schlauchnippels werden zwei Ausgangsteile eingesetzt. Das Nippelende und der Verankerungsteil werden aus einem Stück Vollmaterial, beispielsweise Metall, durch spanende Verarbeitung, also durch Drehen und Bohren hergestellt. Dabei ist es möglich, jede gewünschte Oberflächenform aus ein und demselben Materialstück durch unterschiedliche Bearbeitung zu erzielen. In nachteiliger Weise wird das Vollmaterial aber zu seinem überwiegenden Teil in Späne verwandelt und das nutzbare Stück macht in manchen Fällen nur ein Drittel des Einsatzgewichtes aus. Bei dieser Herstellung wird am Ende des Verankerungsteil, der dem Nippelende abgekehrt ist, als zweites Stück ein Anschlußrohrangelötet, so daß hier als Ausgangsmaterial bereits ein Rohr eingesetzt wird. Das Anschlußrohr dient dazu, ggfs. einen Dichtkopf, einen Anschlußstutzen, einen Flanschanschluß oder ähnliche Verbindungsteile aufzunehmen, kann aber auch ohne ein solches Verbindungsteil den Schlauchnippel abschließend bilden. Schlauchnippel für die Führung und Leitung hydraulischer Medien werden bekanntermaßen in einer leichten und in einer schweren Baureihe hergestellt. Die Unterschiede liegen hinsichtlich des Anschlußrohres in unterschiedlichen Durchmessern und Wandstärken. Dabei kommen gleiche Nippelabmessungen zurVerwendung, d. h. Nippelende und Verankerungsteil stimmen in ihren geometrischen Abmessungen bei der leichten Baureihe und bei der schweren Baureihe überein. Lediglich am freien Ende des Verankerungsteils ist eine unterschiedliche Lötbohrung gefertigt, je nachdem, ob ein Anschlußrohr der leichten Baureihe oder ein solches der schweren Baureihe angelötet werden soll.

Es ist weiterhin bekannt, Schlauchnippel auch in der Weise herzustellen, daß sie aus drei Teilen zusammengeschweißt werden. Dabei wird das Nippelende als erstes Teil hergestellt, indem Rohrmaterial spanend bearbeitet wird, Als zweites Bearbeitungsteil wird Vollmaterial eingesetzt, welches spanend zu dem Verankerungsteil ungeformtwird. Als drittes Materialstück wird das Anschlußrohr eingesetzt, und zwar jeweils unterschiedliche Anschlußrohre für die leichte Baureihe und für die schwere Baureihe. Bei der Zusammenfügung, also bei der Herstellung des Schlauchnippels werden die drei jeweiligen Teile stumpf aufeinandergeschweißt. Die Herstellung der Schlauchnippel aus drei Teilen erbringt zwar vergleichsweise wenigerAbfaII, weil zur Herstellung des Nippelendes Rohrmaterial eingesetzt wird. Die Fertigung erfordert jedoch einen zusätzlichen Schweißvorgang zwischen Verankerungsteil und Nippelende. Das Aneinanderschweißen der drei Teile führt im übrigen dazu, daß sich im Bereich des Innendurchmessers des Schlauchnippels mindestens zwei Schweißwulste aufwölben, die zu Druckverlusten des Mediums führen. Die vielen eingesetzten Teile in ihren jeweils unterschiedlichen Ausführungsformen erfordern eine erhebliche Lagerhaltung und bevorratung, wenn eine schnelle Lieferbereitschaft gegeben sein soll.

Aus dem DE-U-6 600 215 ist ein Schlauchnippel bekannt, der ein Nippelende, eine Verankerungsnut und ein Anschlußrohr aufweist. Der Schlauchnippel kann im Bereich seines Nippelendes durch Einziehen des größeren Durchmessers des Anschlußrohres hergestellt werden. Das Nippelende weist keine für die Schlauchfesthaltung bestimmte Oberflächengestaltung mit Nuten und Rillen auf, sondern besitzt eine zylindrische, glatt durchgehende Oberfläche. Die Verankerungsnut, die dem Einsatz eines Rings dient, besitzt halbkreisförmige Gestaltung und erstreckt sich etwa über die Hälfte der Wandstärke im Bereich des Anschlußrohres, in welchem kein Einzug erfolgt. Die für die Schlauchfesthaltung bestimmte Oberflächengestaltung ist im Bereich der Quetschfassung vorgesehen und legt sich von außen auf den Schlauch.

Der Erfindung liegt die Aufgabe zugrunde, ein Verfahren zur Herstellung eines Schlauchnippels der eingangs beschriebenen Art derart zu verbessern und zu vereinfachen, daß die Schlauchnippel wahlweise wirtschaftlicher als bisher hergestellt werden können. Eine spanende Bearbeitung soll möglichst weitgehend vermieden werden.

Erfindungsgemäß wird dies dadurch erreicht, daß der Schlauchnippel mit seinem Nippelende, Verankerungsteil und Anschlußrohr aus einem zusammenhängenden Rohrabschnitt durch Kaltumformung hergestellt wird, und daß das Nippelende des Schlauchnippels aus dem Rohrabschnitt durch Durchmesserreduzierung und die Verankerungsnut am Verankerungsteil ebenfalls durch Durchmesserreduzierung geformt wird. Durch eine solche Herstellungsweise wird nicht nur eine bessere Materialausnutzung erzielt, sondern auch ein Verbindung, insbes. Verschweißen von Einzelteilen wird vermieden, so daß auch der Innen-durchmesser des Schlauchnippels durch Schweißwulste nicht beeinträchtigt wird. Es ergibt sich eine schnelle Lieferbereitschaft bei vereinfachter und reduzierter Lagerhaltung, weils insgesamt Schlauchnippel hergestellt werden können, die sich sowohl für die leichte Baureihe als auch für die schwere Baureihe bei insoweit unveränderten Abmessungen einsetzen lassen. Dies hat tei Iweise seine Ursache auch darin, daß durch die Kaltumformung eine höhere Festigkeit des Materials erreicht und somit ausgenutzt wird.

Zur Herstellung von Schlauchnippeln der leichten oder der schweren Baureihe wird ein Rohrabschnitt der schweren Baureihe eingesetzt und das Anschlußrohrbleitet bei Herstellung von Schlauchnippeln des schweren Baureihe ohne Kaltverformung während es bei Herstellung von Schlauchnippeln der leichten Baureihe durch Durchmesserreduzierung umgeformt wird. Mitdem Rohrabschnittderschweren Baureihe werden auf diese Art und Weise Schlauchnippel beider Baureihen hergestellt.

Die Kaltumformung kann durch Rundhämmern, Rollieren, Einziehen durch Konen usw. erfolgen. Mit diesen Bearbeitungsverfahren, die auf anderen Gebieten, nicht jedoch zur Herstellung von Schlauchnippeln, bekannt sind, lassen sich die nicht unbeträchtlichen Durchmesserveränderungen am Rohrabschnitt erzielen, und zwar unter Einhaltung von Herstellungstoleranzen, zu deren Realisierung bisher eine spanende Bearbeitung für erforderlich gehalten wurde. Das erfindungsgemäße Verfahren ist deshalb auch überraschend einfach.

Als Rohrabschnitt kann auch ein solcher mit einer Außenfläche in Form eines Sechskants eingesetzt werden. Dies ist insbes. dann vorteilhaft, wenn der Schlauchnippel an irgendeiner Stelle auch einen Sechskant-Querschnitt aufweisen soll. Dies kann z.B. im Bereich eines das Anschlußrohr abschließenden Anschlußstutzens der Fall sein. Im allgemeinen wird jedoch ein Rohrabschnitt eingesetzt, der sowohl im Bereich seines Innendurchmessers als auch seines Außendurchmessers kreisförmigen Querschnitt aufweist.

Das freie Ende des Anschlußrohres kann zur Ausbildung eines Dichtkopfes, eines Anschlußstutzens o. dgl. zunächst kaltverformt und dann spanend bearbeitet werden. Dies ist insbes. für eine vereinfachte Lagerhaltung sinnvoll, wobei die spanende Bearbeitung erst unmittelbar vor der Auslieferung des jeweiligen Teils entsprechend angepaßt erfolgt und durchgeführt wird.

Das Anschlußrohr kann von dem freien Ende des Verankerungsteils gebildet sein, wobei dort ggfs. ein separat hergestellter Dichtkopf, Anschlußstutzen o. dgl. angeschweißt wird. Das Anschlußrohr kann also sehr kurz sein wenn ein axial sehr kurz bauender Nippel hergestellt werden soll.

Es ist auch möglich, daß der Rohrabschnitt durch Kaltumformung zunächst in ein Halbfertigteil umgeformt und im Bereich des Anschlußrohres zurAusbildung eines Dichtkopfes, Anschlußstutzens o. dgl. spanend fertiggestellt wird. Hierbei werden die Schlauchnippel als Halbfertigteile auf Lager genommen, so daß die restliche Bearbeitung vergleichsweise kurzfristig durchgeführt werden kann.

Das neue Herstellungsverfahren wird anhand verschiedenerAusführungsbeispiele weiter beschrieben und verdeutlicht. Es zeigt:
Fig. 1 einen Halbschnitt durch einen fertiggestellten Schlauchnippel in einer ersten Ausführungsform,
Fig. 2 die Darstellung des als Krümmer ausgebildeten Anschlußrohres für schwere Baureihe,
Fig. 3 die Darstellung des als Krümmer ausgebildeten Anschlußrohres für leichte Baureihe,
Fig. 4 die Ansicht eines Dichtkopfes, wie er am Ende des Anschlußrohres angeformt sein kann,
Fig. 5 die Darstellung eines Anschlußstutzens am Ende des Anschlußrohres,
Fig. 6 die Darstellung eines Flanschanschlusses am Ende des Anschlußrohres,
Fig. 7 die Darstellung eines Schlauchnippels in einer zweiten Ausführungsform,
Fig. 8 die Darstellung eines Schlauchnippels mit angeformten Flanschanschluß,
Fig. 9 die Darstellung eines weiteren Schlauchnippels,
Fig. 10 die Darstellung eines Rohrabschnittes als Ausgangsmaterial,
Fig. 11 einen Schlauchnippel als Halbfertigteil aus dem Rohrabschnitt gemäß Fig. 10,
Fig. 12 einen weiteren Schlauchabschnitt als Halbfertigteil,
Fig. 13 einen dritten Schlauchnippel als Halbfertigteil, und
Fig. 14 die Darstellung eines Schlauchnippels als Fertigteil aus dem Halbfertigteil gemäß Fig. 11.

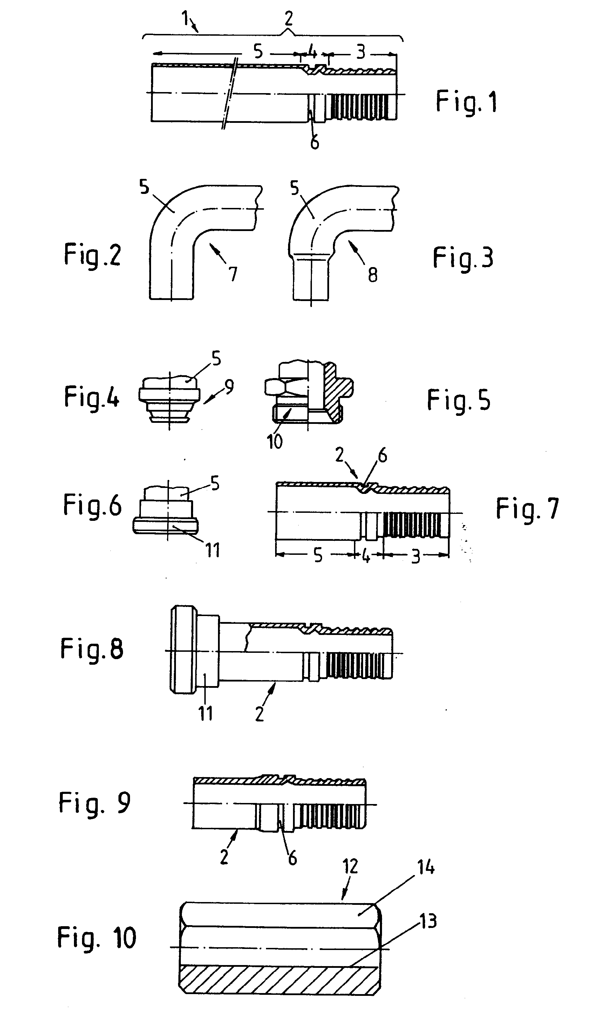

In Fig. 1 ist ein bereits teilweise kalt umgeformter Rohrabschnitt 1 dargestellt, der so als Schlauchnippel bereits als Fertigprodukt geliefert werden kann. Der Schlauchnippel 2 weist ein Nippelende 3, einen Verankerungsteil 4 und ein Anschlußrohr 5 auf. Das Nippelende 3 besitzt auf seiner äußeren Oberfläche in bekannter Weise Nuten bzw, Rillen, die zur Schlauchfesthaltung dienen. In diesem Bereich wird das Nippelende 3 in einen Schlauchhineingesteckt und mit einer nicht dargestellten Preß- oder Schraubfassung gesichert. Im Falle einer Preßfassung besitzt der Verankerungsteil 4 eine Verankerungsnut 6, in die ein Kragen der Preßfassung eingreift. Das Anschlußrohr 5 entspricht in seinen radialen Abmessungen dem Rohrabschnitt 1, so daß dieser in diesem Bereich unverformt bleibt. Das Anschlußrohr 5 kann je nach Anforderung und Einbausituation ganz unterschiedliche Längen besitzen. Auch die Ausbildung von Krümmern in verschiedenen Winkelgraden ist möglich. Fig. 2 zeigt einen 90°-Krümmer 7, zu dem das Anschlußrohr 5 verformt worden ist, und zwar für schwere Baureihe. Fig. 3 zeigt einen Krümmer 8 aus dem Anschlußrohr 5, dessen freies Ende zur Realisierung eines Schlauchnippels der leichten Baureihe im Durchmesser herabgeformt ist. An das Anschlußrohr 5, z.B. auch in der Krümmerform gemäß den Fig. 2 und 3 können nun weitere Verbindungselemente angeschlossen, insbes. angeschweißt werden. Als Beispiel sind ein Dichtkopf 9 in Fig. 4, ein Anschlußstutzen 10 in Fig. 5 und ein Flanschanschluß 11 in Fig. 6 dargestellt. Der Dichtkopf 9, der Anschlußstutzen 10 und der Flanschanschluß 11 können wahlweise als separate Bauteile hergestellt und durch Stumpfschweißen mit dem freien Ende des Anschlußrohres 5 verbunden werden. Es ist aber auch möglich, das freie Ende des Anschlußrohres 5 direkt als Dichtkopf 9, Anschlußstutzen 10 oder Flanschanschluß 11 auszubilden, so daß ein Schweißvorgang entfällt.

Fig. 7 zeigt einen Schlauchnippel 2 einer weiteren Ausführungsform, an dem ebenfalls ein Nippelende 3, ein Verankerungsteil 4 und ein Anschlußrohr 5 einstückig ausgebildet bzw. kaltverformt sind. Ein solcher Schlauchnippel 2 kann in vergleichsweise grossen Stückzahlen hergestellt und auf Lager genommen werden. Er läßt sich beispielsweise durch eine Stumpfschweißung mit einem Flanschanschluß 11 versehen, wie dies Fig. 8 zeigt, so daß dann ein spezieller fertiggestellterverkaufsfähiger Schlauchnippel entsteht.

Auch Fig. 9 zeigt einen weiteren Schlauchnippel 2.

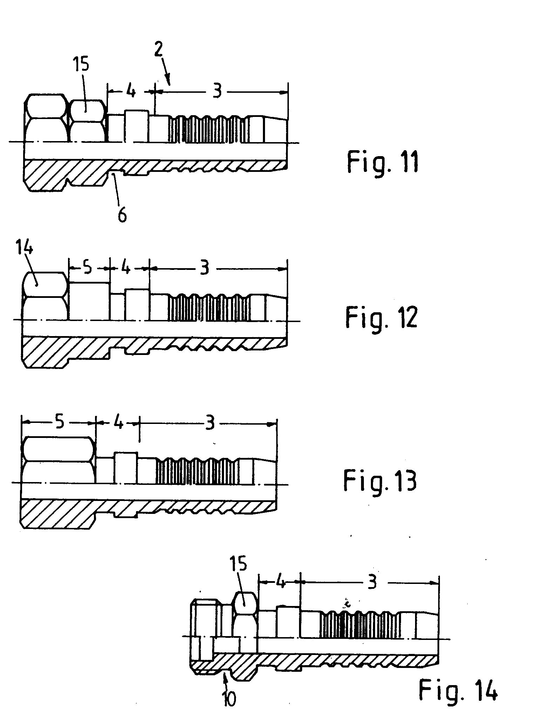

Während die bisher dargestellten Schlauchnippel aus einem Rohrabschnitt 1 hergestellt wurden, der sowohl kreisförmigen Innendurchmesser als auch kreisförmigen Außendurchmesser aufwies, läßt sich auch ein Rohrabschnitt 12 gemäß Fig. 10 einsetzen, der also einen kreisförmigen Innendurchmesser 13 und eine äussere Oberflächengestaltung in Form eines Sechskant-Querschnitts 14 aufweist. Ein solcher Rohrabschnitt 12 läßt sich durch Kaltumformung in Schlauchnippel der verschiedensten Gestaltung überführen, wie sie in den Fig. 11, 12, und 13 beispielhaft dargestellt sind. Gemäß Fig. 11 wird der Rohrabschnitt im Bereich seines Anschlußrohres zu einem zweiten Sechskant-Querschnitt 15 mit vergleichsweise kleineren Abmessungen herabgeformt, um den Anschlußstutzen 10 mit seinem Sechskant-Querschnitt 15 vorzuformen, wie dies als fertiges Teil in Fig. 14 dargestellt ist. Bei dem Ausführungsbeispiel der Fig. 12 verbleibt ein kurzes StückAnschlußrohr 5. Der unverformte Bereich des Anschlußrohres 5 in Form des Sechskant-Querschnittes 14 kann dann später z.B. in Form eines Dichtkopfes 9 (Fig. 4) umgeformt werden. Bei dem Ausführungsbeispiel der Fig. 13, welches ebenfalls ein Halbfertigteil darstellt, läßt sich der dem Anschlußrohr 5 entsprechende Bereich später ebenfalls zu einem Anschlußstutzen 10 (Fig. 5) umformen. Dieses Umformen kann durch Kaltumformung oder auch durch spanende Bearbeitung geschehen.

### Bezugszeichenliste:

1 =Rohrabschnitt
2=Schlauchnippel
3=Nippelende
4=Verankerungsteil
5=Anschlußrohr
6=Verankerungsnut
7=Krümmer
8=Krümmer
9=Dichtkopf
10=Anschlußstutzen
11=Flanschanschluß
12=Rohrabschnitt
13=Innendurchmesser
14=Sechskant-Querschnitt
15=Sechskant-Querschnitt

## Patentansprüche

1. Verfahren zur Herstellung von Schlauchnippeln siehe Einfügungen auf dem Blatt d. Spalten 1, 2 für hydraulisch belastete Preß- oder Schraubarmaturen, mit einem Nippelende zum Aufschieben eines Schlauchs, einem Verankerungsteil zur Aufnahme der Fassung und einem Anschlußrohr, wobei das Nippelende eine für die Schlauchfesthaltung bestimmte Oberflächengestaltung siehe Einfügungen auf dem Blattd. Spalten 1, und der Verankerungsteil eine Verankerungsnut zum Angriff der Fassung aufweist, dadurch gekennzeichnet, daß der Schlauchnippel (2) mit seinem Nippelende (3), Verankerungsteil (4) und Anschlußrohr (5) aus einem zusammenhängenden Rohrabschnitt (1, 12) durch Kaltumformung hergestellt wird, und daß das Nippelende (3) des Schlauchnippels (2) aus dem Rohrabschnitt (1) durch Durchmesserreduzierung und die Verankerungsnut (6) am Verankerungsteil (4) ebenfalls durch Durchmesserreduzierung geformt wird, daß zur Herstellung von Schlauchnippeln (2) der leichten oder der schweren Baureihe ein Rohrabschnitt (1, 12) der schweren Baureihe eingesetzt wird und daß das Anschlußrohr (5) bei Herstellung von Schlauchnippeln der schweren Baureihe ohne Kaltverformung bleibt, während es bei Herstellung von Schlauchnippeln des leichten Baureihe durch Durchmesserreduzierung umgeformt wird.

2. Verfahren nach Anspruch 1, dadurch gekennzeichnet, daß die Kaltumformung durch Rundhämmern, Rollieren, Einziehen durch Konen usw. erfolgt.

3. Verfahren nach Anspruch 1, dadurch gekennzeichnet, daß als Rohrabschnitt (12) ein solcher mit einer Außenfläche in Form eines Sechskants (14) eingesetzt wird.

4. Verfahren nach Anspruch 1 oder 3, dadurch gekennzeichnet, daß das freie Ende des Anschlußrohres (5) zur Ausbildung eines Dichtkopfes (9), Anschlußstutzens (10) oder dergleichen zunächst kaltverformt und dann spanend bearbeitet wird.

5. Verfahren nach Anspruch 1, dadurch gekennzeichnet, daß das Anschlußrohr (5) von dem freien Ende des Verankerungsteils (4) gebildet ist und ein Dichtkopf (9), Anschlußstutzen (10) o. dgl. dort angeschweißt wird.

6. Verfahren nach einem oder mehreren der Ansprüche 1 bis 5, dadurch gekennzeichnet, daß der Rohrabschnitt (1, 12) durch Kaltumformung zunächst in ein Halbfertigteil umgeformt und im Bereich des Anschlußrohres (5) zur Ausbildung eines Dichtkopfes (9), Anschlußstutzens (10) o. dgl. spanend fertiggestellt wird.

## Claims

1. Process for producing hose nipples of the light-duty or the heavy-duty series for hydraulically loaded crimped or screwed fittings, with a nipple end for pushing on a hose, with an anchoring part for receiving the socket and ajoining pipe, the nipple end having a surface design with slots or grooves intended for the retention of the hose and the anchoring part having an anchoring groove for the engagement of the socket, characterized in that the hose nipple (2) together with its nipple end (3), anchoring part (4) and joining pipe (5) is produced from a continuous pipe section (1, 12) by cold forming, and in that the nipple end (3) of the hose nipple (2) is formed from the pipe section (1) as a result of a reduction of diameter, and the anchoring groove (6) at the anchoring part (4) is likewise formed as a result of a reduction of diameter, in that, to produce hose nipples (2) of the light-duty or heavy-duty series, a pipe section (1, 12) of the heavy-duty series is used, and in that the joining pipe (5) remains without cold forming when producing hose nipples of the heavy-duty series, while it is shaped by means of a reduction of diameter when producing hose nipples of the light-duty series.

2. Process according to Claim 1, characterized in that the cold forming is carried out by swaging, roller-burnishing, drawing through cones, etc.

3. Process according to Claim 1, characterized in that the pipe section (12) used has an outer face in the form of a hexagon (14).

4. Process according to Claim 1 or 3, characterized in that, to produce a sealing head (9), connection piece (10) or the like, the free end of the joining pipe (5) is first cold-formed and then machine- cut.

5. Process according to Claim 1, characterized in that the joining pipe (5) is formed by the free end of the anchoring part (4) and a sealing head (9), connection piece (10) or the like is welded on there.

6. Process according to one or more of Claims 1 to 5, characterized in that first the pipe section (1, 12) is shaped into a semi-finished part by cold forming and in the region of the joining pipe (5) is finished by machine-cutting to produce a sealing head (9), connection piece (10) or the like.

## Revendications

1. Procédé de fabrication d'embouts pour des tuyaux souples sur des raccords à emboîtement ou sur des raccords filetés, soumis à des charges hydrauliques, avec une extrémité de l'embout sur laquelle s'enfile un tuyau souple, un élément d'ancrage pour recevoir la douille de sertissage et un tube de raccordement, l'extrémité de l'embout présentant une conformation de surface déterminée, avec des gorges et/ou des rainures pour retenir le tuyau souple et l'élément d'ancrage présentant une gorge d'ancrage pour donner prise à la douille de sertissage,
caractérisé en ce que l'embout (2) pour un tuyau souple, avec son extrémité d'embout (3), son élément d'ancrage (4) et son tube de raccordement (5) est fabriqué par déformation à froid d'un tronçon de tube (1, 12) d'une seule pièce, et en ce que l'extrémité d'embout (3) de l'embout (2) pour tuyau souple est formée à partir du tronçon de tube (1) par réduction de diamètre et la gorge d'ancrage (6) sur l'élément d'ancrage (4) est également formée par réduction de diamètre, en ce que, pour la fabrication d'embouts (2) pour tuyaux souples de la série légère ou de la série lourde, on utilise un tronçon de tube (1, 12) de la série lourde, et en ce que le tube de raccordement (5) reste sans déformation à froid lors de la fabrication d'embouts de la série lourde, tandis qu'il est déformé par réduction de son diamètre lors de la fabrication d'embouts de la série légère.

2. Procédé selon la revendication 1, caractérisé en ce que la déformation à froid a lieu par martelage circulaire, par moletage, par étirage entre des galets coniques, etc...

3. Procédé selon la revendication 1, caractérisé en ce qu'on utilisé comme ébauche un tronçon de tube (12) ayant une surface externe en forme de six-pans (14).

4. Procédé selon la revendication 1 ou 3, caractérisé en ce que l'extrémité libre du tube de raccordement (5) est tout d'abord déformée à froid et est ensuite usinée pour former une tête d'étanchéité (9), un manchon de raccordement (10) ou autre élément analogue.

5. Procédé selon la revendication 1, caractérisé en ce que le tube de raccordement (5) est constitué par l'extrémité libre de l'élément d'ancrage (4), et en ce qu'une tête d'étanchéité (9), un manchon de raccordement (10) ou autre élément analogue est soudé sur cet élément (4).

6. Procédé selon une ou plusieurs das revendications 1 à 5, caractérisé en ce que le tronçon du tube (1,12) est en premier lieu transformé par déformation à froid en une pièce à moitié finie qui est ensuite terminée par usinage dans la région du tube de raccordement (5) pour former une tête d'étanchéité (9), un manchon de raccordement (10) ou autre élément analogue.
